# FASCICULE DE BREVET EUROPEEN

(11) **EP 4 086 576 B1**
(45) Date de publication et mention de la délivrance du brevet: **25.02.2026**
(21) Numéro de dépôt: 22171166.6
(22) Date de dépôt: 02.05.2022
(51) Int. Cl.: G01C 21/20, G06Q 10/04, G08G 5/00, G08G 5/22, G08G 5/26, G08G 5/32, G08G 5/55, G08G 5/56, G08G 5/72, G06N 3/0442, G06N 3/0455, G06N 3/092

(54) **GESTION OPTIMISEE DU TRAFIC AERIEN DE VEHICULES AERIENS SANS PILOTES**
OPTIMIERTES MANAGEMENT DES FLUGVERKEHRS VON UNBEMANNTEN LUFTFAHRZEUGEN
OPTIMISED MANAGEMENT OF THE AIR TRAFFIC OF UNMANNED AERIAL VEHICLES

(30) Priorité: 03.05.2021 FR 2104644
(43) Date de publication de la demande: 09.11.2022
(73) Titulaire: THALES, 92400 Courbevoie (FR)
(72) Inventeur: PESQUET-POPESCU, Béatrice, 94628 RUNGIS (FR); MARTIN, Nicolas, 94628 RUNGIS (FR); RÉA, Olivier, 94628 RUNGIS (FR); PURICA, Andrei, 94628 RUNGIS (FR)
(74) Mandataire: Atout PI Laplace

(56) Documents cités:
- EP-A1- 2 492 856
- US-A1- 2019 184 561
- US-A1- 2020 346 769
- US-A1- 2020 391 384

## Description

### Domaine de l'invention

La présente invention concerne la gestion du trafic aérien. Plus spécifiquement, la présente invention concerne la gestion du trafic aérien comprenant des véhicules aériens sans pilotes.

### Etat de l'art

Les véhicules aériens sans pilotes, également appelés drones, sont de plus en plus présents dans les espaces aériens. Les drones peuvent être pilotés par un opérateur à distance, ou pilotés de manière autonome. L'absence de pilote dans le drone permet d'envisager pour ceux-ci de nouvelles formes, par rapport aux aéronefs avec pilote. Par exemple, un drone peut être beaucoup plus petit qu'un aéronef avec pilote. Ceci permet d'envisager de nouvelles applications, telles que la livraison de colis par drones. Le coût d'opération d'un drone est généralement plus bas que celui d'un aéronef piloté, car il ne requiert pas la présence d'un pilote à bord, et peut être miniaturisé.

Ainsi, les drones sont de plus en plus présents dans l'espace aérien, en particulier à basse altitude et en environnement urbain.

Il est nécessaire, pour assurer la sécurité de la navigation par drone, de déployer des solutions de contrôle aérien permettant notamment de fournir à chaque drone des trajectoires ne comportant pas de risques de conflit avec des obstacles (pouvant être par exemple du relief, des bâtiments ou d'autres aéronefs).

Des solutions connues de gestion du trafic aérien ou de guidage d'un véhicule autonome ont par exemple été proposées dans EP 2 492 856 A1 et US 2020/391384 A1.

Les systèmes de contrôle aériens classiques reposent sur la supervision d'un espace aérien par un contrôleur aérien, qui visualise l'ensemble des trajectoires d'aéronefs et interagit avec les pilotes des aéronefs.

Les solutions de contrôle aérien classique ne sont pas applicables à un espace aérien comportant un grand nombre de drones, et ce pour plusieurs raisons.

D'une part, il est attendu que les drones génèrent un trafic aérien beaucoup plus dense que les aéronefs avec pilotes. En particulier, en environnement urbain, de nombreux drones peuvent se partager un espace aérien, induisant ainsi une très forte concentration de drones dans l'espace. De plus, les drones volent à basse altitude, et souvent proches d'obstacles (bâtiments, autre drones, relief...), ce qui nécessite une prise de décision plus rapide pour interagir avec des drones. Un contrôleur aérien humain risque donc de ne pas être capable d'analyser suffisamment vite la situation aérienne, et de proposer des trajectoires sécurisées aux drones en temps utile.

D'autre part, les drones peuvent ne pas être pilotés par un opérateur humain, ou piloté par un opérateur distant qui n'est pas nécessairement un expert de la navigation aérienne. Les habitudes de communication entre contrôleurs aériens et pilotes de ligne ne peuvent donc pas être directement transposées à des échanges entre un contrôle aérien et des drones.

Il y a donc besoin d'un système de contrôle aérien capable d'optimiser automatiquement des trajectoires dans un espace aérien comprenant un grand nombre de véhicules aériens sans pilotes.

A cet effet, il est proposé une méthode, un système et un produit programme d'ordinateur définies respectivement selon les revendications indépendantes 1, 9 et 10.

D'autres modes de réalisation sont définis dans les revendications dépendantes.

D'autres caractéristiques, détails et avantages de l'invention ressortiront à la lecture de la description faite en référence aux dessins annexés donnés à titre d'exemple et qui représentent, respectivement :
[Fig.1] un exemple d'espace aérien comprenant des véhicules aériens sans pilotes, pour le contrôle duquel l'invention peut être implémentée ;
[Fig.2] un exemple d'interface homme machine permettant à un opérateur de définir une trajectoire de véhicule aérien sans pilote, dans un ensemble de modes de réalisation de l'invention ;
[Fig.3] un système de calcul, dans un ensemble de modes de mise en œuvre de l'invention ;
[Fig.4] une méthode mise en œuvre par ordinateur, dans un ensemble de modes de mise en œuvre de l'invention ;
[Fig.5] un exemple de méthode de calcul d'une trajectoire 4D optimisée selon un ensemble de modes de mise en œuvre de l'invention.

Certains acronymes anglo-saxons couramment utilisés dans le domaine technique de la présente demande pourront être employés au cours de la description. Ces acronymes sont listés dans le tableau ci-dessous, avec notamment leur expression anglo-saxonne et leur signification.

**[Tableaux 1]**

| Acronyme | Expression | Signification |
|---|---|---|
| ATM | Air Traffic Management | Gestion du Trafic Aérien : ensemble des activités menées pour assurer la sécurité et la fluidité du trafic aérien. |
| FL | Flight Level | Niveau de Vol. En aéronautique, désigne une altitude exprimée en centaines de pieds au-dessus de la surface isobare 1013,25 hPa. |
| LSTM | Long Short Term Memory | Mémoire à Long et à Court Terme. Désigne un type d'autoencodeur. Un autoencodeur LSTM est un type d'autoencodeur capable d'apprendre des dynamiques complexes à partir de l'ordonnancement temporel de séquences d'entrée. |
| UAV | Unmanned Aerial Vehicle | Véhicule Aérien Sans pilote. Aéronef sans équipage dont le pilotage est automatisé ou télécommandé, généralement désigné par le terme « drone ». |
| UTM | Unmanned aircraft system Traffic Manaqment | Système ATM dévelopé pour la gestion du traffic aérien comprenant des UAV |

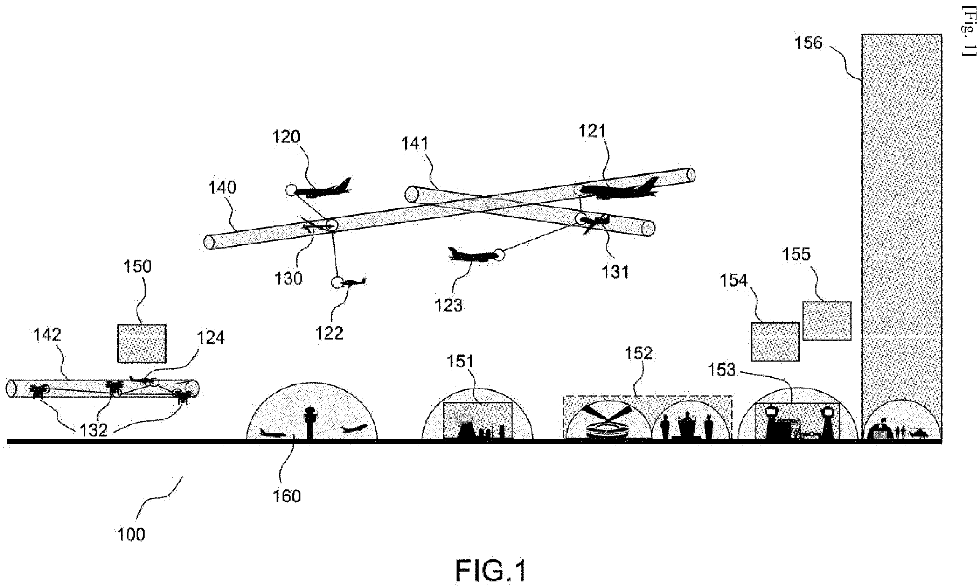

La figure 1 représente un exemple d'espace aérien comprenant des véhicules aériens sans pilotes, pour le contrôle duquel l'invention peut être implémentée.

L'espace aérien 100 est un espace aérien dans lequel cohabitent des aéronefs pilotés 120, 121, 122, 123, 124, et des véhicules aériens sans pilotes (encore appelés drones ou UAVs) 130, 131 et 132. L'UAV 132 est représenté en 3 positions, correspondant à 3 positions successives sur sa trajectoire. Les UAVs 130, 131 et 132 sont respectivement associés à des couloirs de sécurité 140, 141 et 142 définissant des couloirs autour de la trajectoire des UAVs, dans lesquels ne doivent pas se trouver d'obstacle pour que l'UAV puisse se déplacer en sécurité.

L'espace aérien comprend également des zones interdites de vol ou obstacles, telles que les zones 150, 151, 152, 153, 154, 155 ou 156. Ces zones peuvent comprendre tout type de zones dans lesquels le vol n'est pas souhaité, comme une centrale nucléaire (zone 151), ou une base militaire (zone 156). Elles peuvent également comprendre des zones dangereuses pour les aéronefs, comme du relief, des bâtiments ou des zones de perturbations météorologiques importantes. Selon les zones, le survol peut être interdit seulement sur certaines plages d'altitudes (comme par exemple pour les zones 150 à 155, ou sur l'ensemble des altitudes, comme pour la zone 156. Les zones interdites peuvent être définies de manière permanente ou temporaire.

L'espace aérien 100 peut être contrôlé par un système de contrôle aérien, dit UTM lorsque les appareils contrôlés sont ou comprennent des UAVs. L'UTM a pour rôle d'optimiser les trajectoires des aéronefs, notamment UAVs, afin que celles-ci ne présentent aucun danger (le cas échéant, d'autres paramètres tels que les temps de parcours, ou la consommation de carburant peuvent être optimisés), et s'assurer du bon suivi des trajectoires par les aéronefs. La vérification du fait que les trajectoires ne présentent aucun danger peut intégrer les couloirs de sécurité 140, 141 et 142, par exemple en s'assurant les que ces couloirs ne rentrent pas en contact les uns avec les autres.

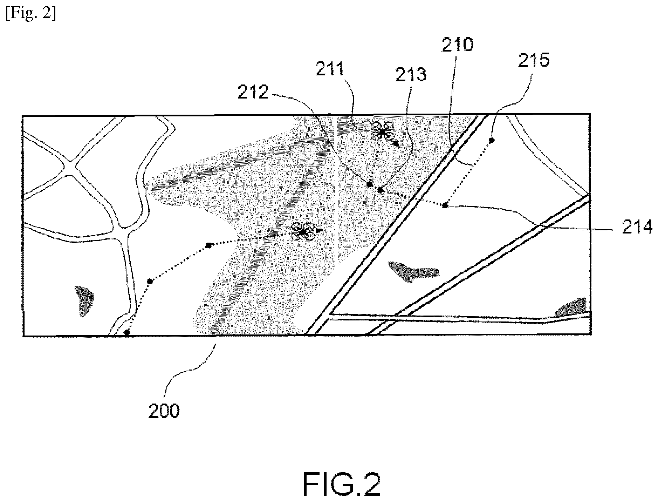

La figure 2 représente un exemple d'interface homme machine permettant à un opérateur de définir une trajectoire de véhicule aérien sans pilote, dans un ensemble de modes de réalisation de l'invention.

L'interface graphique, ou IHM, 200 permet à un opérateur d'UAV de définir une trajectoire. L'IHM représente une carte d'une zone géographique, par-dessus laquelle l'opérateur peut définir des trajectoires d'UAV, notamment en entrant des points de cheminement, ou waypoints, sur la carte. Par exemple, l'utilisateur peut définir la trajectoire 210 du drone 211 en entrant successivement dans l'interface 200 les points de cheminement 212, 213, 214 et 215.

Une fois la trajectoire définie, elle peut être envoyée à un système de contrôle de type UTM qui pourra vérifier qu'elle ne génère pas de conflit, et le cas échéant proposer une trajectoire alternative optimale et sécurisée.

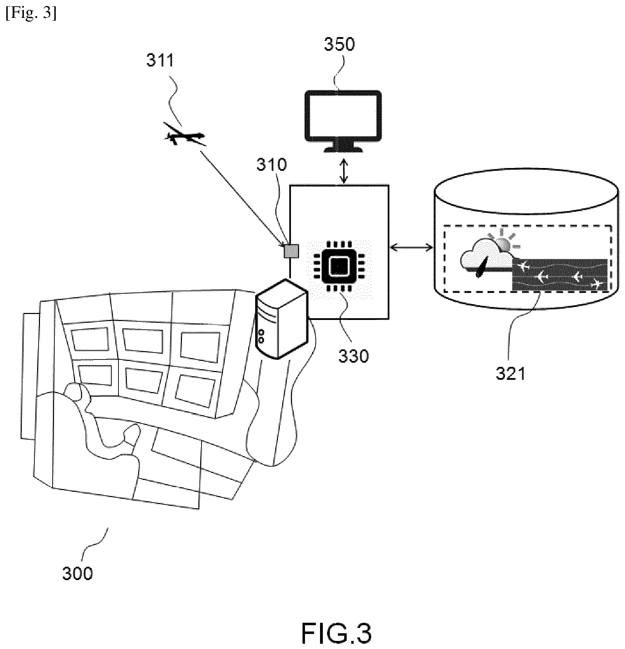

La figure 3 représente un système de calcul, dans un ensemble de modes de mise en œuvre de l'invention.

Le système de calcul 300 peut être implémenté au sein d'un système de gestion de trafic aérien de type UTM. Selon différents modes de réalisation de l'invention, il peut être complètement autonome, ou bien supervisé par un opérateur tel qu'un contrôleur aérien. Contrairement à un système ATM classique, un opérateur d'un UTM, s'il existe, aura essentiellement une fonction de contrôle, mais ne sera par défaut pas impliqué dans la définition des trajectoires.

Le système 300 est un système de calcul. Selon un ensemble de modes de réalisation de l'invention, le système 300 peut être un dispositif de calcul unique tel qu'un ordinateur, un serveur, ou tout autre système apte à effectuer des calculs informatiques. Le système 300 peut également comporter une pluralité de dispositifs de calcul. Par exemple, le système 300 peut être une ferme de serveurs comportant plusieurs serveurs de calcul.

Le système 300 comprend ainsi au moins une unité de calcul 330. L'au moins une unité de calcul 310 peut être n'importe quel type d'unité de calcul apte à effectuer des calculs informatiques. Par exemple, l'unité de calcul peut être un processeur configuré avec des instructions machines, un microprocesseur, un circuit intégré, un microcontrôleur, un circuit logique programmable, ou tout autre unité de calcul apte à être programmée pour effectuer des opérations de calcul.

Le système 300 comprend au moins un port de communication 310 apte à communiquer avec un véhicule aérien sans pilote (UAV) 311. Ce port de communication peut ainsi recevoir de l'UAV 311 une demande de trajectoire, et lui communiquer en retour une trajectoire optimisée.

Dans un ensemble de modes de réalisation de l'invention, le port de communication 310 est également apte à communiquer avec un opérateur de l'UAV, par exemple avec l'interface 200. Ainsi, le port de communication peut par exemple recevoir une demande de trajectoire de l'interface 200, et envoyer la trajectoire optimisée à la fois à l'UAV lui-même pour le suivi de la trajectoire, et à l'interface 200 pour afficher la trajectoire optimisée.

L'au moins un port de communication 310 peut également être utilisé pour recevoir différentes informations de l'espace aérien, telles que les positions des différents aéronefs, des informations météorologiques etc...

A cet effet, l'au moins un port de communication 310 peut être de différents types : connexion internet, liaison radio, radars, etc... L'invention n'est pas restreinte à un type de port de communication, et l'homme de l'art pourra adapter la réception des paramètres d'entrée aux canaux d'entrée disponibles. De même, selon différents modes de mise en œuvre de l'invention, les différents paramètres d'entrée et de sortie peuvent être reçus sur un port unique, ou plusieurs ports, de même type ou de types différents. Par exemple, des trajectoires d'aéronefs peuvent être reçues par liaison radio, et les informations météorologiques par une connexion internet. La communication avec des UAVs peut se faire par le biais d'une liaison sans fil telle qu'une liaison 4G ou 5G.

Le système 300 comprend un accès à au moins un support de stockage d'information 320. L'au moins un support de stockage d'information 330 peut être de tout type de stockage apte à stoker des informations : disque dur, CD, DVD, bande magnétique, une carte mémoire, une clé USB, une mémoire Flash, une mémoire vive.

Le support de stockage d'informations peut être intégré au système 300. Par exemple, si le système 300 est un dispositif de calcul tel qu'un serveur, le support de stockage d'information peut être un disque dur du dispositif. Dans le cas où le système 300 est composé d'une pluralité de dispositifs de calcul, l'au moins un support de stockage peut être un ensemble de mémoires réparties sur les différents dispositifs de calcul.

Le système 300 peut également avoir accès à l'au moins un support de stockage d'information 330 via une connexion. Par exemple, l'au moins un support de stockage d'information peut consister en au moins un disque dur accédé à distance, par exemple via au moins un serveur NAS, ou via un système d'informatique en nuage (de l'anglais cloud computing).

L'au moins un support de stockage d'information 330 stocke une définition d'un ensemble d'obstacles 321 d'un espace aérien. La notion d'obstacle est ici définie au sens large, comme tout élément pouvant mettre en danger la sécurité de l'UAV, et devant être évité. Un obstacle peut par exemple consister en un relief, un bâtiment, une météo dangereuse, ou la présence d'un autre aéronef. A cet effet, l'ensemble d'obstacle peut comprendre des trajectoires d'aéronefs. Les obstacles peuvent être définis dans des bases de données fixes (par exemple, bases de données reliefs et bâtiments), et/ou peuvent être reçus par le biais de l'au moins un port de communication 310.

Par exemple, les positions des différents UAVs dans l'espace aérien peuvent être reçues par le biais d'un réseau 4G/5G si les UAVs sont équipés de cartes SIM et géolocalisés par le réseau 4G/5G, mais aussi par des capteurs tels que des radars. De manière plus générale, le système 300 reçoit les positions des différents aéronefs dans l'espace aérien ainsi que leur évolution. Ceci peut se faire à intervalle régulier, par exemple toutes les quelques secondes, et/ou à la survenue d'événements, tels que l'apparition d'un UAV dans l'espace aérien, ou un changement brusque de cap d'un UAV. Ceci permet de surveiller la position des aéronefs par rapport aux obstacles fixes et mobiles. Ceci permet notamment de s'assurer que le trajectoires prévues des différents aéronefs ne rentrent pas en conflit les unes par rapport aux autres, mais aussi prendre automatiquement les mesures nécessaires en cas de déviation d'un aéronef par rapport à sa trajectoire prévue : si l'aéronef est un UAV, une nouvelle trajectoire peut être automatiquement calculée ; si l'écart risque d'entraîner des conflits avec d'autres trajectoires de drones, celles-ci peuvent être recalculées pour éviter le conflit.

Les trajectoires d'aéronefs peuvent être exprimées de différentes manières. Par exemple, les trajectoires peuvent être exprimées sous la forme de trajectoires 4D, avec des points de passage définis par une latitude, longitude, et un FL et un temps de passage. Les trajectoires peuvent également comprendre, pour chaque point de passage, un cap associé. Une trajectoire peut également être associée à un type d'avion et/ou un callsign (dénomination d'un aéronef donné).

Les informations météorologiques peuvent notamment comprendre au moins une des informations suivantes : informations chiffrées (températures, vents, pressions...), par exemple par le biais d'un fichier GRIB, texte descriptif de la météo (par exemple, présence d'une tempête, orage, etc...), messages SIGMET. De manière plus générale, tout type de données fournissant des indications sur la météo au sein de l'espace aérien peut être utilisé.

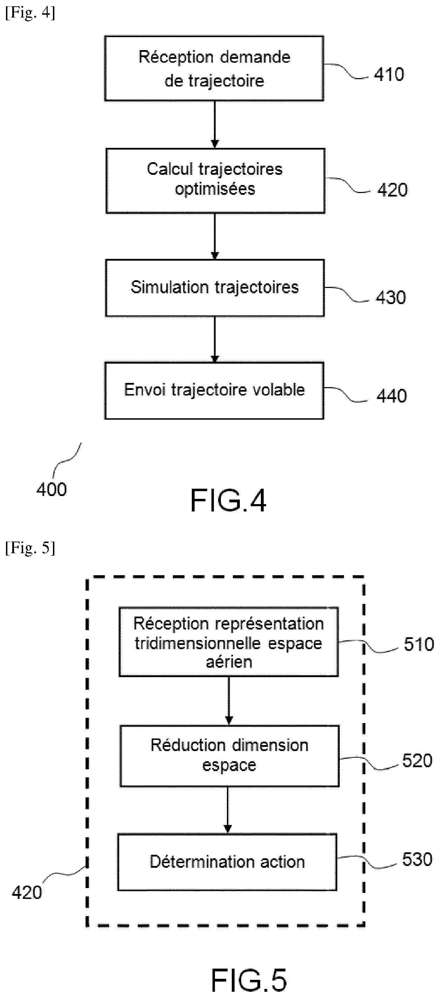

L'au moins une unité de calcul 330 est configurée pour fournir à l'UAV ayant fait une demande de trajectoire une trajectoire optimale. A cet effet, l'au moins une unité de calcul 330 est configurée pour exécuter une méthode selon l'un des modes de réalisation de l'invention, telle que définie en figure 4, afin de proposer une trajectoire optimale à l'UAV.

L'exécution de la méthode pour proposer une trajectoire optimale à un UAV peut se faire par exemple à l'initiative :
- De l'UAV lui-même ;
- D'un opérateur de l'UAV ;
- De l'UTM lui-même, par exemple lorsqu'une déviation de l'UAV par rapport à sa trajectoire, ou l'apparition d'un conflit (apparition d'un autre UAV à proximité de la trajectoire par exemple) est détectée.

Le système de calcul 300 centralise l'ensemble des trajectoires d'aéronefs, et en particulier de drones dans l'espace aérien. Ainsi, le système de calcul peut proposer automatiquement à chaque UAV une trajectoire optimisée dès que nécessaire. Ceci permet une optimisation automatique des trajectoires de drones, et une résolution automatique de conflits dans l'espace aérien, même lorsque le nombre de drones dans l'espace aérien est très élevé.

La figure 4 représente une méthode mise en œuvre par ordinateur, dans un ensemble de modes de mise en œuvre de l'invention.

La méthode 400 est une méthode visant à proposer automatiquement à des UAVs dans un espace aérien une trajectoire volable, sécurisée et aussi optimisée que possible. La méthode 400 peut être exécutée par un système de calcul tel que le système de calcul 300 et/ou dans un système UTM.

La méthode 400 comprend une première étape 410 de réception d'une demande de trajectoire d'un véhicule aérien sans pilote (UAV), ladite demande comprenant :
- un point initial ;
- un point final ;
- au moins un paramètre de manœuvrabilité de l'UAV.

La réception d'une demande de trajectoire peut se faire à l'initiative :
- De l'UAV lui-même ;
- D'un opérateur de l'UAV ;
- De l'UTM lui-même, par exemple lorsqu'une déviation de l'UAV par rapport à sa trajectoire, ou l'apparition d'un conflit (apparition d'un autre UAV à proximité de la trajectoire par exemple) est détectée.

Dans un ensemble de modes de réalisation de l'invention, l'au moins un paramètre de manœuvrabilité de l'UAV comprend une vitesse et une accélération maximale de l'UAV.

Dans un ensemble de modes de dé réalisation de l'invention, l'au moins un paramètre de manœuvrabilité de l'UAV peut également comprendre au moins un paramètre choisi parmi :
- Un nombre de moteurs de l'UAV ;
- Une vitesse minimale de l'UAV.

De manière plus générale, l'au moins un paramètre de manœuvrabilité peut comprendre tout paramètre ayant un impact sur les capacités de vol de l'UAV.

Dans un ensemble de modes de réalisation de l'invention, la demande de trajectoire comprend également une suite de points de cheminement définissant une trajectoire cible. Cette suite de points de cheminement peut par exemple se présenter sous la forme de points 3D ou 4D, et peut par exemple représentée une trajectoire cible initiale, définie par exemple via l'interface 200, ou correspondant à la trajectoire prédite courante d'un UAV.

La trajectoire souhaitée peut par exemple se présenter sous le formalisme suivant :

```
 " id" : " 2350_20190123i ",
 " route " : [
  {
     " speed " : 453.0,
     " timestamp " : 670,
     " latitude " : 53.2331,
     " longitude " : -3.0804,
     " level " : 34000.0,
  },
  {
     " speed " : 453.0,
     " timestamp " : 751,
     " latitude " : 53.2448,
     " longitude " : -3.363
     " level " : 34000.0,
  },
  ...
```

Dans ce formalisme, une route ou trajectoire cible d'un UAV est définie par une identifiant « id », et une suite de points de cheminement successifs, chaque point de cheminement étant défini par une accolade, avec les paramètres suivants :
- " speed " (mot anglais signifiant vitesse): vitesse de l'UAV au point de cheminement, en nœuds ;
- " timestamp " (mot anglais signifiant estampille temporelle): temps de passage au point de cheminement ;
- " latitude " : latitude point de cheminement, en degrés ;
- " longitude " : longitude point de cheminement, en degrés ;
- " level " (mot anglais signifiant niveau): niveau de vol de l'UAV au point de cheminement.

La méthode 400 comprend ensuite une deuxième étape 420 de calcul d'une pluralité de trajectoires 4D optimisées entre le point initial et le point final, respectant l'au moins un paramètre de manœuvrabilité, et évitant des obstacles dans un espace aérien, chaque trajectoire 4D étant associée à un score de performance.

Cette étape consiste en pratique à calculer des trajectoires 4D optimisées évitant l'ensemble des obstacles identifiés dans l'espace aérien (i.e terrain, bâtiments, météo, autres aéronefs...) tout en respectant les contraintes de manœuvrabilité.

Une trajectoire 4D peut se présenter comme une succession de points de cheminements 4D (latitude, longitude, altitude / niveau de vol, et temps) définissant les points passage de l'UAV et les temps de passage associés. Les points de cheminement peuvent également être associés à des informations de vol, telles que des vitesses et des accélérations de l'UAV.

Les trajectoires 4D peuvent être optimisées selon l'un des, ou une combinaison des paramètres suivants :
- minimisation d'une longueur de la trajectoire en passant par une suite de points de cheminement dans un ordre prédéfini ;
- minimisation d'un nombre de manœuvres de l'UAV au cours de la trajectoire ;
- respect de l'au moins un paramètre de manœuvrabilité ;
- évitement d'obstacles selon un niveau de criticité, la traversée d'un obstacle diminuant le score de performance associé à la trajectoire, en fonction de la criticité de l'obstacle. Certains obstacles peuvent être infranchissables ;
- respect d'un couloir de sécurité autour d'une route cible. Le couloir de sécurité se présente comme un tube autour des segments d'une route cible. La largeur du couloir de sécurité peut dépendre de paramètres tels que les paramètres de manœuvrabilité, ou la vitesse du vent. La largeur du couloir de sécurité peut également être définie par l'opérateur du drone et/ou l'UTM.

Le score de performance peut être calculé en fonction du niveau d'atteinte/de respect du ou des paramètres sélectionnés.

L'étape de calcul des trajectoires 4D optimisées consiste donc à proposer des trajectoires 4D respectant autant que possible un ensemble de critères, chaque trajectoire 4D étant associée à un score de performance selon le niveau de respect des critères.

De nombreuses méthodes permettent d'optimiser une trajectoire d'aéronef selon un ensemble de critères. En particulier, une méthode d'optimisation est décrite en référence à la figure 5.

La méthode 400 comprend ensuite une troisième étape 430 de simulation, par un simulateur de vol, de ladite pluralité de trajectoires 4D, par ordre de scores de performance décroissants, jusqu'à ce qu'une trajectoire 4D soit considérée comme volable par le simulateur de vol.

Cette étape consiste à simuler les trajectoires 4D calculées. En effet, même si le calcul des trajectoires 4D prend en compte les paramètres de manœuvrabilité des aéronefs, une trajectoire 4D ainsi obtenue peut dans certains cas ne pas être volable par l'UAV. La simulation permet donc de s'assurer qu'une trajectoire retenue in fine est bien volable par l'UAV.

A cet effet, le simulateur de vol prend en entrée la trajectoire 4D et l'au moins un paramètre de manœuvrabilité. Si c'est la trajectoire 4D est bien volable par l'UAV, elle sera acceptée par la simulation. Sinon, elle sera rejetée. L'acceptation ou le rejet de la trajectoire permet de déterminer si une trajectoire 4D donnée sera effectivement volable ou non par l'UAV.

Différents types de simulateur de vol peuvent être utilisés. Les trajectoires 4D sont simulées par ordre de scores de performance décroissants, jusqu'à ce qu'une trajectoire 4D soit considérée comme volable par le simulateur de vol.

Dit autrement, les trajectoires sont classées, de celle ayant le meilleur score de performance (la plus optimisée) à celle ayant le moins bon score de performance (la moins optimisée). La première trajectoire (la plus optimisée) est simulée en premier. Si elle est acceptée par le simulateur, et donc volable, elle est sélectionnée comme trajectoire à suivre. Sinon (si elle est rejetée par le simulateur, et donc non volable), la deuxième trajectoire la plus optimisée est simulée pour vérifier si elle est volable. Si cette deuxième trajectoire est acceptée par le simulateur, et donc volable, elle est sélectionnée comme trajectoire à suivre. Sinon, la 3^{e} trajectoire la plus optimisée est simulée, et ainsi de suite jusqu'à ce qu'une trajectoire volable soit identifiée.

Ainsi, la trajectoire sélectionnée à l'issue des simulations est la trajectoire volable présentant le meilleur score de performance, c'est-à-dire la trajectoire la plus optimisée que le drone pourra effectivement suivre.

La méthode 400 comprend ensuite une quatrième étape 440 d'envoi de la trajectoire considérée comme volable par le simulateur de vol au véhicule aérien sans pilote.

Cette étape consiste à envoyer à l'UAV la trajectoire sélectionnée à l'étape 430, c'est-à-dire la trajectoire la plus optimisée considérée comme volable par l'UAV. L'UAV pourra alors suivre la trajectoire ainsi reçue.

L'envoi de la trajectoire à l'UAV peut par exemple se faire par l'au moins un port de communication 310. Par exemple, elle peut se faire par le biais d'un réseau 4G ou 5G.

L'envoi de la trajectoire peut être fait sous la forme d'une suite de points 4D, complétés le cas échéant par des informations de vol additionnelles (vitesse, accélération à chaque point par exemple), ou des actions à effectuer par l'UAV.

L'invention permet de proposer automatiquement à tout UAV dans un espace une trajectoire à la fois sécurisée vis-à-vis des menaces connues, et optimisée. La méthode peut être exécutée automatiquement, et permet une interaction automatisée avec des UAVs. La méthode selon l'invention permet donc de gérer un trafic dense d'aéronefs non pilotés, quel que soit le nombre d'aéronefs présents.

La méthode selon l'invention permet d'éviter les conflits à moyen terme entre des aéronefs dans un espace aérien.

La méthode 400 peut ensuite comprendre une étape du suivi de la trajectoire par l'UAV. Cette étape consiste à vérifier que l'UAV suit bien sa trajectoire, à la fois en position et en temps, et qu'aucun danger ne vient menacer la trajectoire. Par exemple, un couloir de sécurité peut être défini comme un tube autour de la trajectoire ; si l'UAV sort du couloir, ou si un obstacle y rentre (par exemple, si un autre aéronef pénètre dans le couloir, une alerte peut être levée, et la trajectoire recalculée.

Une fois une trajectoire 4D sélectionnée et envoyée à un UAV pour être suivie, cette trajectoire peut être ajoutée aux obstacles 321 pour le calcul des trajectoires d'autres aéronefs.

Ceci permet d'obtenir une gestion centralisée des trajectoires d'aéronefs : dès qu'une trajectoire est optimisée, et envoyée à un UAV pour suivi, elle est intégrée dans les obstacles à éviter par les autres aéronefs, en particulier UAVs. Ceci permet de centraliser en un point l'optimisation et la gestion des trajectoires d'aéronefs, et donc de gérer de manière globale un trafic dense de drones.

La méthode selon l'invention permet donc une gestion centralisée et sécurisée des trajectoires d'aéronefs, y compris sans pilote, au sein d'un espace aérien, dans laquelle les conflits entre aéronefs sont évités en amont, par une optimisation des trajectoires d'aéronefs.

La figure 5 représente un exemple de méthode de calcul d'une trajectoire 4D optimisée selon un ensemble de modes de mise en œuvre de l'invention.

Tel qu'utilisé ici, un scénario représente un ensemble de plans de vols avec les identifiants et les catégories d'au moins un aéronef.

Les étapes 510, 520 et 530 de la méthode représentées en figures 5 correspondent à des sous-étapes possibles de l'étape 420. Les modes de réalisation visés à la figure 5 fournissent en outre une méthode pour l'optimisation d'une trajectoire 4D d'un UAV pour lequel une trajectoire doit être calculée, qui sera simplement appelé « l'UAV », et au moins un autre aéronef de l'espace aérien à partir d'une représentation tridimensionnelle de l'espace aérien à l'instant où la méthode est exécutée.

A l'étape 510, une représentation tridimensionnelle de l'espace aérien au moment de l'exécution de la méthode est reçue.

A l'étape 520, une représentation de l'espace aérien en dimension réduite peut être déterminée en appliquant un auto-encodeur récurrent à la représentation tridimensionnelle de l'espace aérien à l'instant d'exécution de la méthode, l'encodage de l'espace aérien correspondant à l'UAV et à l'au moins un autre aéronef présent dans l'espace aérien.

Selon certains modes de réalisation, l'étape 520 peut comprendre une sous-étape effectuée hors ligne pour entraîner l'auto-encodeur récurrent en utilisant des données réelles des plans de vol de l'UAV et de l'au moins un autre aéronef, indépendamment de l'optimisation de la trajectoire.

Selon certains modes de réalisation, l'auto-encodeur récurrent peut être entraîné en utilisant une variante de la rétro-propagation comme la méthode du gradient conjugué ou l'algorithme du gradient.

Selon certains modes de réalisation, l'auto-encodeur récurrent peut être un auto-encodeur LSTM.

A l'étape 530, une action à mettre en œuvre par l'UAV peut être déterminée à partir de la représentation de l'espace aérien en dimension réduite, d'informations relatives à l'UAV et/ou l'au moins un autre aéronef de l'espace aérien en appliquant un algorithme d'apprentissage par renforcement profond.

Selon certains modes de réalisation, les informations relatives à l'UAV et/ou l'au moins un autre aéronef peuvent comprendre la distance verticale, la distance horizontale, et l'azimut entre l'UAV et l'au moins un autre aéronef, ainsi que la catégorie de l'UAV et la position des derniers points nommés.

Selon certains modes de réalisation, l'action à mettre en œuvre par l'UAV peut être choisie dans un groupe comprenant la régulation de la vitesse de l'UAV, le changement d'altitude de l'UAV, le changement de direction de l'UAV avec retour sur la trajectoire initiale, le direct sur un point nommé, l'attente sans faire d'action.

Selon certains modes de réalisation, l'algorithme d'apprentissage par renforcement profond peut être conçu pour déterminer l'action optimale parmi toutes les actions possibles pour l'optimisation de trajectoires en respectant un ensemble de contraintes ou exigences comprenant :
- la gestion de l'espace aérien tridimensionnel ;
- la gestion de tous les types d'actions possibles pour la résolution de conflits aériens ;
- la gestion d'un nombre variable d'aéronefs avec hétérogénéité des catégories et des compagnies ;
- l'optimisation de la trajectoire, et le cas échéant la résolution d'un conflit aérien avec prise en compte des aéronefs alentour pour éviter la création de nouveaux conflits aériens, et
- la résolution efficace d'un conflit aérien tout en minimisant le détour effectué suite à une prise d'action, et la prise en compte de scénarios et de géométries de conflits non précédemment rencontrés.

Selon les modes de réalisation de l'invention, le modèle de l'algorithme d'apprentissage par renforcement profond peut être défini par :
- un agent autonome correspondant à un aéronef, l'agent autonome devant apprendre les actions à prendre pour résoudre les conflits dans l'espace aérien à partir d'expérience de façon à optimiser une fonction de récompense au cours du temps ;
- l'environnement de l'agent correspond à une représentation de l'espace aérien décrite par un scénario, l'agent étant plongé dans cet environnement et prenant des actions lui permettant d'interagir et de changer son environnement et de changer d'états ;
- les actions prises par un agent comprennent toutes les actions possibles de contrôle aérien que peut prendre un aéronef pour résoudre un conflit aérien, comprenant le changement de direction, le changement d'altitude, le changement de vitesse, le direct sur un point nommé, et le changement de direction avec retour sur la trajectoire initiale.

Selon certains modes de réalisation, l'agent peut ne pas observer la totalité de l'environnement mais seulement quelques variables lui permettant d'évoluer efficacement dans l'environnement. Ces variables peuvent comprendre la vélocité, la position, et l'altitude de l'agent et de tous les autres aéronefs présents, ainsi que des informations que le conflit aérien à résoudre et les positions des points nommés sur lesquels l'agent peut faire un 'direct'.

A chaque pas de temps t de l'algorithme d'apprentissage par renforcement, l'agent perçoit sont état *sₜ* ∈ *S* à l'instant donné t et l'ensemble des actions possibles *A*(*sₜ*). L'agent choisit une action *a* ∈ *A*(*sₜ*) et reçoit de l'environnement un nouvel état *s*_{*t*+1} correspondant à la situation à l'instant donné t+1 et une récompense *R*_{*t*+1}. La décision de l'action à choisir par l'agent est prise par une politique *π:S* → *A* qui est une fonction qui conditionnellement à un état, associe une probabilité de sélection à chaque action dans cet état. Le but de l'agent est de maximiser les récompenses globales qu'il reçoit de la part de l'environnement au cours d'un épisode, un épisode comprenant tous les états de l'agent qui se situent entre un état initial et un état terminal. La valeur désignée par Q-valeur et notée *Q*(*s, a*)*,* mesure la récompense globale attendue si l'agent est dans l'état *s* ∈ *S* et effectue l'action *a*, puis continue à interagir avec son environnement jusqu'à la fin de l'épisode courant selon une politique *π*.

Selon certains modes de réalisation, l'algorithme d'apprentissage par renforcement profond peut être préalablement entraîné à approximer, pour une représentation donnée du scénario dans l'espace aérien au moment de l'exécution de la méthode, une fonction de récompense, de manière à ce que l'action à mettre en œuvre par l'UAV corresponde à la stratégie optimale apprise permettant la maximisation de la fonction de récompense. L'entraînement de l'algorithme d'apprentissage par renforcement permet ainsi de déterminer les sommes cumulées (ou des récompenses globales) futures que peut obtenir l'agent pour une action et une situation (ou scénario) donnés. Après l'entraînement et la convergence de l'algorithme d'apprentissage par renforcement, l'action qui rapporte la fonction de récompense maximale pour la situation courante donnée au moment du conflit peut être sélectionnée, elle représente l'action qui correspond à la stratégie optimale pour l'optimisation de la trajectoire.

De manière plus générale, plusieurs actions correspondant à plusieurs trajectoires 4D candidates peuvent être sélectionnées, la valeur de la fonction de récompense donnant le score de performance associée à chaque trajectoire 4D candidates candidate. Ces différentes trajectoires candidates 4D pourront alors être simulées à l'étape 430, par ordre de score de performance (défini par la valeur de récompense pour une action / trajectoire 4D donnée) décroissant.

Selon certains modes de réalisation, la fonction de récompense peut être préalablement modélisée afin que la stratégie optimale de maximisation des récompenses corresponde à l'ensemble des contraintes précédemment définies. Selon certains modes de réalisation, la fonction de récompense peut être modélisée pour associer une valeur à chaque triplet comprenant une situation aérienne à un premier instant donné t, une action *a* prise à un temps donné t, et une situation aérienne à un second instant donné t+1, la valeur reflétant l'attractivité du triplé et se décomposant en plusieurs pénalités comprenant :
- une pénalité positive si l'action *a* prise à l'instant donné t a résolu un conflit ;
- une pénalité négative si l'action *a* prise à l'instant donné t n'a pas permis de résoudre un conflit ou a engendré au moins un autre conflit aérien;
- une pénalité négative si l'action *a* prise à l'instant donné t engendre une nouvelle trajectoire provoquant un détour ;
- une pénalité positive si l'action *a* prise à l'instant donné t engendre une nouvelle trajectoire plus courte ;
- une pénalité négative si l'action *a* prise à l'instant donné t permet de résoudre le conflit aérien et la résolution a lieu proche du conflit, et
- une pénalité négative croissante avec le nombre d'actions prises pour la résolution du conflit aérien.

Un conflit peut par exemple être généré dès qu'une trajectoire intersecte un couloir de sécurité d'un autre aéronef, tel que les couloirs de sécurité 140, 141, 142, ou un obstacle tels que les obstacles 150,151, 152, 153, 154, 155 ou 156.

Dans un ensemble de modes de réalisation, chaque obstacle est associé à un niveau de criticité (le niveau de criticité variant avec la nécessité d'éviter l'obstacle), et le montant de la pénalité négative associée à un conflit avec l'obstacle dépend du niveau de criticité de l'obstacle.

Dit autrement, un obstacle peu critique (par exemple, le survol d'une école ou la traversée d'une zone de turbulence) pourra être associé à une pénalité faible. Une traversée de cet obstacle sera donc pénalisante, mais possible si elle permet par ailleurs une optimisation importante de la trajectoire, ou l'évitement d'un conflit plus critique. A contrario, un obstacle critique voire infranchissable (par exemple, un couloir de sécurité d'un autre aéronef, ou une base militaire) sera associé à une pénalité importante voire rédhibitoire, et ne devrait donc pas être traversé par la trajectoire.

Ceci permet une gestion fine des conflits possibles en fonction du niveau de criticité des conflits.

Selon certains modes de réalisation, l'algorithme d'apprentissage par renforcement profond peut être préalablement entraîné en utilisant des données opérationnelles et des scénarios correspondant à toutes les manœuvres possibles de l'UAV, toutes les actions possibles pour résoudre un conflit aérien, et toutes les catégories possibles des aéronefs en conflit.

Selon certains modes de réalisation, l'algorithme d'apprentissage par renforcement profond peut être préalablement entraîné en utilisant des scénarios réalistes créés automatiquement à partir de données opérationnelles et en réalisant l'augmentation des données pour un apprentissage profond par exemple en variant les catégories des aéronefs, en ajoutant des délais sur certains aéronefs permettant de modifier et rajouter des conflits aériens.

Selon certains modes de réalisation, l'algorithme d'apprentissage par renforcement profond peut être un réseau de neurones profond mettant en œuvre une technique d'apprentissage par renforcement.

Selon certains modes de réalisation, l'algorithme d'apprentissage par renforcement profond peut être choisi parmi les algorithmes de la famille des algorithmes de Q-learning ou de la famille des algorithmes actor-critic.

Les exemples ci-dessus démontrent la capacité de l'invention à gérer de manière centralisée les conflits dans un espace aérien comprenant de nombreux aéronefs sans pilotes. Ils ne sont cependant donnés qu'à titre d'exemple et ne limitent en aucun cas la portée de l'invention, définie dans les revendications ci-dessous.

## Revendications

1. Méthode mise en œuvre par ordinateur (400) comprenant :
- la réception (410), via un port de communication (310), d'une demande de trajectoire d'un véhicule aérien sans pilote dans un espace aérien comprenant un ensemble d'obstacles, chaque obstacle étant associé à un niveau de criticité relatif à l'évitement dudit obstacle par ledit véhicule aérien, ladite demande comprenant :
o un point initial ;
o un point final ;
o au moins un paramètre de manœuvrabilité du véhicule aérien sans pilote, comprenant tout paramètre ayant un impact sur les capacités de vol du véhicule aérien sans pilote;
la méthode ayant accès à un support de stockage d'information (320) stockant une définition de l'ensemble d'obstacles de l'espace aérien;
- le calcul (420) d'une pluralité de trajectoires 4D optimisées entre le point initial et le point final, respectant l'au moins un paramètre de manœuvrabilité et évitant des obstacles de l'espace aérien, chaque trajectoire 4D comprenant une succession de points de passage définis par une latitude, une longitude, une altitude ou un niveau de vol, et un temps de passage, et chaque trajectoire 4D étant associée à un score de performance, ledit score de performance étant déterminé au moins en fonction des niveaux de criticité des obstacles dudit espace aérien, la traversée d'un obstacle diminuant le score de performance en fonction de la criticité de l'obstacle;
- la simulation (430), par un simulateur de vol, de ladite pluralité de trajectoires 4D, par ordre de scores de performance décroissants, jusqu'à ce qu'une trajectoire 4D soit considérée comme volable par le simulateur de vol, ledit simulateur de vol prenant en entrée une trajectoire 4D considérée et l'au moins un paramètre de manœuvrabilité ;
- l'envoi (440) de ladite trajectoire considérée comme volable par le simulateur de vol audit véhicule aérien sans pilote.

2. Méthode selon la revendication 1, dans laquelle la demande de trajectoire comprend une suite de points de cheminement définissant une route cible.

3. Méthode selon l'un des revendications précédentes, dans laquelle une trajectoire 4D est optimisée selon l'un, ou une combinaison des paramètres suivants :
o minimisation d'une longueur de la trajectoire en passant par une suite de points de cheminement dans un ordre prédéfini ;
o minimisation d'un nombre de manœuvres de véhicule aérien sans pilote au cours de la trajectoire ;
o respect de l'au moins un paramètre de manœuvrabilité ;
o évitement des obstacles selon lesdits niveaux de criticité des obstacles ;
o respect d'un couloir de sécurité autour d'une route cible.

4. Méthode selon l'une des revendications précédentes, comprenant l'ajout de la trajectoire considérée comme volable aux obstacles, pour le calcul de trajectoire d'autres aéronefs dans l'espace aérien.

5. Méthode selon l'une des revendications précédentes dans laquelle le calcul (420) d'une trajectoire 4D de la pluralité de trajectoires 4D optimisées comprend :
- la réception (510) d'une représentation tridimensionnelle de l'espace aérien à l'instant où la méthode est exécutée ;
- l'encodage (520) de l'espace aérien configurée pour déterminer une représentation de l'espace aérien en dimension réduite en appliquant un auto-encodeur récurrent à ladite représentation tridimensionnelle de l'espace aérien audit instant où la méthode est exécutée;
- la détermination (530) d'une action à mettre en œuvre par ledit véhicule aérien sans pilote, par la mise en œuvre d'un algorithme d'apprentissage par renforcement profond pour déterminer ladite action à partir de ladite représentation de l'espace aérien en dimension réduite, d'informations relatives audit véhicule aérien sans pilote et/ou à au moins un autre aéronef dans l'espace aérien.

6. Méthode selon la revendication 5, **caractérisée en ce que** ledit algorithme d'apprentissage par renforcement profond est préalablement entraîné à approximer, pour une représentation donnée d'un scénario dans l'espace aérien à l'instant où la méthode est exécutée, une fonction de récompense, ladite action correspondant à une stratégie optimale maximisant ladite fonction de récompense lors de la phase d'entraînement, ladite fonction de récompense définissant le score de performance associé à la trajectoire 4D.

7. Méthode selon la revendication 6, caractérisée en ce ladite fonction de récompense associe une valeur à chaque triplet comprenant une situation aérienne à un premier instant donné, une action prise à un temps donné, et une situation aérienne à un second instant donné, ladite valeur se décomposant en plusieurs pénalités comprenant:
- une pénalité positive si l'action prise à l'instant donné a résolu un conflit, ou
- une pénalité négative si l'action prise à l'instant donné n'a pas permis de résoudre un conflit ou a engendré au moins un autre conflit aérien ;
- une pénalité négative si l'action prise à l'instant donné engendre une nouvelle trajectoire provoquant un détour ;
- une pénalité positive si l'action prise à l'instant donné engendre une nouvelle trajectoire plus courte ;
- une pénalité négative si l'action prise à l'instant donné permet de résoudre ledit conflit aérien et la résolution a lieu proche du conflit ;
- une pénalité négative croissante avec le nombre d'actions prises pour la résolution dudit conflit aérien.

8. Méthode selon la revendication 7, dans laquelle le montant de la pénalité négative si l'action prise à l'instant donné n'a pas permis de résoudre un conflit ou a engendré au moins un autre conflit aérien dépend de la criticité dudit conflit ou dudit autre conflit aérien.

9. Système (300) comprenant :
- au moins un port de communication (310) apte à communiquer avec un véhicule aérien sans pilote (311) ;
- un accès à au moins un support de stockage d'information (320) stockant une définition d'un ensemble d'obstacles (321) d'un espace aérien ;
- au moins une unité de calcul (330) configurée, pour exécuter une méthode selon l'une des revendications 1 à 8.

10. Produit programme d'ordinateur comprenant des instructions de code de programme pour l'exécution des étapes de la méthode selon l'une des revendications 1 à 8 lorsque ledit programme est exécuté sur un ordinateur.

## Patentansprüche

1. Verfahren, das von einem Computer (400) umgesetzt wird, umfassend:
- den Empfang (410), über einen Kommunikationsanschluss (310), einer Flugbahnanfrage eines unbemannten Luftfahrzeugs in einem Luftraum, der eine Anordnung von Hindernissen umfasst, wobei jedes Hindernis eine Kritizitätsstufe in Bezug auf das Vermeiden des Hindernisses durch das Luftfahrzeug zugeordnet ist, wobei die Anfrage umfasst:
∘ einen Anfangspunkt;
∘ einen Abschlusspunkt;
∘ mindestens einen Manövrierbarkeitsparameter des unbemannten Luftfahrzeugs, der jeden Parameter umfasst, der einen Einfluss auf die Flugkapazitäten des unbemannten Luftfahrzeugs aufweist;
wobei das Verfahren Zugriff auf ein Informationsspeichermedium (320) aufweist, das eine Definition der Anordnung von Hindernissen im Luftraum speichert;
- die Berechnung (420) einer Vielzahl von optimierten 4D-Flugbahnen zwischen dem Anfangspunkt und dem Abschlusspunkt unter Beachtung des mindestens einen Manövrierbarkeitsparameters und Vermeidung der Hindernisse des Luftraumes, wobei jede 4D-Flugbahn eine Aufeinanderfolge von Durchlaufpunkten, die durch eine Breite, eine Länge, eine Höhe oder eine Flughöhe definiert sind, und eine Durchlaufzeit umfasst, und jede 4D-Flugbahn eine Leistungspunktzahl zugeordnet ist, wobei die Leistungspunktzahl mindestens in Abhängigkeit von den Kritizitätsstufen der Hindernisse des Luftraumes bestimmt wird, wobei die Durchquerung eines Hindernisses die Leistungspunktzahl in Abhängigkeit von der Kritizität des Hindernisses verringert;
- die Simulation (430), durch einen Flugsimulator der Vielzahl von 4D-Flugbahnen nach Reihenfolge der sich verringernden Leistungspunktzahlen, bis eine 4D-Flugbahn vom Flugsimulator als fliegbar betrachtet wird, wobei der Flugsimulator eine betrachtete 4D-Flugbahn und den mindestens einen Manövierbarkeitsparameter als Eingang annimmt;
- das Senden (440) der betrachteten Flugbahn als fliegbar vom Flugsimulator an das unbemannte Luftfahrzeug.

2. Verfahren nach Anspruch 1, wobei die Flugbahnanfrage eine Folge von Fortschrittspunkten umfasst, die eine Zielroute definieren.

3. Verfahren nach einem der vorstehenden Ansprüche, wobei eine 4D-Flugbahn gemäß dem einen, oder einer Kombination der folgenden Parameter optimiert ist:
∘ Minimieren einer Länge der Flugbahn durch Durchlaufen einer Reihe von Fortschrittspunkten in einer vordefinierten Reihenfolge;
∘ Minimieren einer Anzahl an Manövern des unbemannten Luftfahrzeugs im Laufe der Flugbahn;
∘ Einhalten des mindestens einen Manövrierbarkeitsparameters;
∘ Vermeiden der Hindernisse gemäß den Kritizitätsstufen der Hindernisse;
∘ Einhalten eines Sicherheitskorridors um eine Zielroute herum.

4. Verfahren nach einem der vorstehenden Ansprüche, umfassend das Hinzufügen der betrachteten Flugbahn als fliegbar zu den Hindernissen, für die Berechnung der Flugbahn anderer Luftfahrzeuge im Luftraum.

5. Verfahren nach einem der vorstehenden Ansprüche, wobei die Berechnung (420) einer 4D-Flugbahn der Vielzahl von optimierten 4D-Flugbahnen umfasst:
- das Empfangen (510) einer dreidimensionalen Darstellung des Luftraums zum Zeitpunkt, zu dem das Verfahren ausgeführt wird;
- das Codieren (520) des konfigurierten Luftraums, um eine Darstellung des Luftraums in reduzierter Abmessung zu bestimmen, durch Anwenden eines wiederkehrenden Auto-Encoders auf die dreidimensionale Darstellung des Luftraumes zum Zeitpunkt, zu dem das Verfahren ausgeführt wird;
- das Bestimmen (530) einer von dem unbemannten Luftfahrzeug umzusetzenden Aktion, durch das Umsetzen eines Lernalgorithmus durch Tiefenverstärkung, um die Aktion aus der Darstellung des Luftraums in reduzierter Abmessung zu bestimmen, von Informationen in Bezug auf das unbemannte Luftfahrzeug und/oder mindestens eines anderen Luftfahrzeugs im Luftraum.

6. Verfahren nach Anspruch 5, **dadurch gekennzeichnet, dass** der Lernalgorithmus durch Tiefenverstärkung vorab trainiert worden ist, um für eine gegebene Darstellung eines Szenarios im Luftraum zum Zeitpunkt, zu dem das Verfahren ausgeführt wird, eine Honorierungsfunktion anzunähern, wobei die Aktion einer optimalen Strategie entspricht, welche die Honorierungsfunktion in der Trainingsphase maximiert, wobei die Honorierungsfunktion die der 4D-Flugbahn zugeordnete Leistungspunktzahl definiert.

7. Verfahren nach Anspruch 6, **dadurch gekennzeichnet, dass** die Honorierungsfunktion jedem Tripel einen Wert zuordnet, die eine Luftlage zu einem ersten gegebenen Zeitpunkt, eine zu einem ersten Zeitpunkt getroffene Aktion, und eine Luftlage zu einem zweiten gegebenen Zeitpunkt umfasst, wobei sich der Wert in mehrere Strafen unterteilt, umfassend:
- eine positive Strafe, wenn die zum gegebenen Zeitpunkt getroffene Aktion einen Konflikt gelöst hat, oder
- eine negative Strafe, wenn die zum gegebenen Zeitpunkt getroffene Aktion es nicht ermöglicht hat, einen Konflikt zu lösen, oder zu mindestens einem anderen Luftkonflikt geführt hat;
- eine negative Strafe, wenn die zum gegebenen Zeitpunkt getroffene Aktion zu einer neuen Flugbahn führt, die einen Umweg hervorruft;
- eine positive Strafe, wenn die zum gegebenen Zeitpunkt getroffene Aktion zu einer neuen kürzeren Flugbahn führt;
- eine negative Strafe, wenn die zum gegebenen Zeitpunkt getroffene Aktion es ermöglicht, denn Luftkonflikt zu lösen und die Lösung nahe dem Konflikt stattfindet;
- eine negative Strafe, die mit der Anzahl an zur Lösung des Luftkonflikts getroffenen Aktionen zunimmt.

8. Verfahren nach Anspruch 7, wobei der Betrag der negativen Strafe, wenn die zum gegebenen Zeitpunkt getroffene Aktion es nicht ermöglicht hat, den Konflikt zu lösen, oder zu mindestens einem andern Luftkonflikt geführt hat, von der Kritizität des Konflikts oder des anderen Luftkonflikts abhängt.

9. System (300), umfassend:
- mindestens einen Kommunikationsanschluss (310), der imstande ist, mit einem unbemannten Luftfahrzeug (311) zu kommunizieren;
- einen Zugriff auf mindestens ein Informationsspeichermedium (320), das eine Definition einer Anordnung von Hindernissen (321) eines Luftraums speichert;
- mindestens eine Berechnungseinheit (330), die konfiguriert ist, um ein Verfahren nach einem der Ansprüche 1 bis 8 auszuführen.

10. Computerprogrammprodukt, das Programmcodeanweisungen zur Ausführung der Schritte des Verfahrens nach einem der Ansprüche 1 bis 8 umfasst, wenn das Programm durch einen Computer ausgeführt wird.

## Claims

1. Method implemented by computer (400) comprising;
- the reception (410), through a communications port (310), of a trajectory request for an unmanned aerial vehicle in an aerial space comprising an arrangement of obstacles, each obstacle being associated with a criticality level relative to the avoidance of said obstacle by said aerial vehicle, said request comprising:
∘ a starting point;
∘ an end point;
∘ at least one maneuverability parameter for the unmanned aerial vehicle, comprising any parameter having an impact on the flying capacities of the unmanned aerial vehicle;
the method having access to an information storage medium (320) storing a definition of the arrangement of obstacles within the aerial space;
- the calculation (420) of a plurality of optimized 4D trajectories between the starting point and the end point, respecting the at least one maneuverability parameter and avoiding obstacles in the aerial space, each 4D trajectory comprising a succession of points of passage defined by a latitude, a longitude, an altitude or a flight level, and a through time, and each 4D trajectory being associated with a performance score, said performance score being determined at least according to the criticality level of the said obstacles of the said aerial space, the crossing of an obstacle lowering the performance score depending on the criticality of the obstacle;
- the simulation (430), by a flight simulator, of said plurality of 4D trajectories, by order of descending performance scores, until a 4D trajectory is considered as flyable by the flight simulator, said flight simulator accepting as input a considered 4D trajectory and the at least one maneuverability parameter;
- the sending (440) of said trajectory considered as flyable by the flight simulator to the said unmanned aerial vehicle.

2. The method according to claim 1, wherein the trajectory request comprises a sequence of waypoints defining a target route.

3. The method according to one of the preceding claims, wherein a 4D trajectory is optimized according to one, or a combination, of the following parameters:
∘ the minimization of a length of the trajectory by passing through a sequence of waypoints in a predefined order;
∘ the minimization of a number of maneuvers of an unmanned aerial vehicle during a trajectory;
∘ the respect of the at least one maneuverability parameter;
∘ the avoidance of obstacles according to the said criticality levels of the obstacles;
o the respect of a safety corridor surrounding a target route.

4. The method according to one of the preceding claims, comprising the addition of the trajectory considered as flyable in terms of the obstacles, for trajectory calculation for other aircraft in the aerial space.

5. The method according to one of the preceding claims wherein the calculation (420) of a 4D trajectory from the plurality of optimized 4D trajectories comprises:
- the reception (510) of a three-dimensional representation of the aerial space at the instant the method is carried out;
- the encoding (520) of the aerial space configured to determine a representation of the aerial space in reduced dimensions by applying a recurrent auto-encoder to the said three-dimensional representation of the aerial space at the said instant the method is carried out;
- the determination (530) of an action to be implemented by said unmanned aerial vehicle, by implementing a deep reinforcement learning algorithm in order to determine said action based on said representation of the aerial space in reduced dimensions, information relative to said unmanned aerial vehicle, and/or at least one other aircraft in the aerial space.

6. The method according to claim 5, **characterized in that** the said deep reinforcement learning algorithm is first trained to approximate, for a given representation of a scenario in the aerial space at the instant the method is carried out, an award function, the said action corresponding to an optimal strategy maximizing the said award function during the training phase, the said award function defining the performance score associated with the 4D trajectory.

7. The method according to claim 6, **characterized in that** the said award function associates a value to each triplet comprising an aerial situation to a given first instant, an action taken at a given time, and an aerial situation to a second given instant, the said value breaking down into several penalties comprising:
- a positive penalty if the action taken at the given instant resolved a conflict, or
- a negative penalty if the action taken at the given instant did not allow the conflict to be resolved or created at least one other aerial conflict;
- a negative penalty if the action taken at the given instant creates a new trajectory provoking a detour;
- a positive penalty if the action taken at the given instant created a new shorter trajectory;
- a negative penalty if the action taken at a given instant allows to resolve the said aerial conflict and the resolution takes place close to the conflict;
- a negative penalty that increases with the number of actions taken to resolve the said aerial conflict.

8. The method according to claim 7, wherein the amount of the negative penalty, if the action taken at the given instant does not allow to resolve a conflict or created at least one other aerial conflict, depends on the criticality of said conflict or the said other aerial conflict.

9. A system (300), comprising:
- at least one communications port (310) capable of communicating with an unmanned aerial vehicle (311);
- an access to at least one information storage medium (320) storing a definition of the arrangement of obstacles (321) within an aerial space;
- at least one unit of calculation (330) configured in order to carry out a method according to one of claims 1 to 8.

10. A computer program product comprising program code instructions for carrying out the steps of the method according to one of claims 1 to 8, when said program is executed on a computer.
